# EUROPÄISCHE PATENTSCHRIFT

(11) **EP 3 044 840 B1**
(45) Veröffentlichungstag und Bekanntmachung des Hinweises auf die Patenterteilung: **03.08.2022**
(21) Anmeldenummer: 14772297.9
(22) Anmeldetag: 09.09.2014
(51) Int. Cl.: H02K 11/40, H01R 39/39

(54) **ABLEITUNGSEINRICHTUNG**
DISCHARGE DEVICE
DISPOSITIF DE DÉRIVATION

(30) Priorität: 09.09.2013 DE 102013014782
(43) Veröffentlichungstag der Anmeldung: 20.07.2016
(73) Patentinhaber: Schunk Transit Systems GmbH, 35435 Wettenberg (DE)
(72) Erfinder: WEIGEL, Wilfried, 35232 Dautphetal (DE); WELLER, Steffen, 35586 Wetzlar (DE)
(74) Vertreter: advotec.
(86) Internationale Anmeldenummer: PCT/EP2014/069211
(87) Internationale Veröffentlichungsnummer: WO 2015/032989

(56) Entgegenhaltungen:
- DE-A1- 2 421 497
- DE-U1-202013 001 243
- US-A1- 2006 228 923
- US-A1- 2013 057 109

## Beschreibung

Die Erfindung betrifft eine Ableitungseinrichtung zur Ableitung elektrostatischer Ladung von einer Welle mit einem biegeelastisch ausgebildeten Leiter mit einer Kohlenstofffaseranordnung mit zumindest zwei an einem Halter angeordneten, sich quer zu einer Wellenlängsachse erstreckenden und gegenüber dem Halter isolierten Leiterabschnitten, die über ihre im Halter aufgenommenen Abschnittsenden mit einem Erdungsleiter verbindbar sind, wobei die Leiterabschnitte jeweils einen Wellenkontaktabschnitt aufweisen und die Wellenkontaktabschnitte zusammen eine Kontaktanordnung zur Kontaktierung mit zwei einander gegenüberliegend in einer Wellenkontaktebene angeordneten Umfangskontaktbereichen eines Wellenumfangs ausbilden, derart, dass die Wellenkontaktabschnitte bei Kontakt zum Wellenumfang tangential zum Wellenumfang angeordnet sind.

Aus der US 2006/0228923 A1 ist eine Ableitungseinrichtung der eingangs genannten Art bekannt, bei der drei am Wellenumfang angeordnete Kontaktelemente mit Wellenkontaktabschnitten am Wellenumfang anliegen. Die Kontaktelemente der bekannten Ableitungseinrichtung dienen neben der elektrischen Kontaktierung der Welle zur Ausbildung einer mechanischen Lagerung und sind daher in einer Blattfederkonfiguration angeordnet.

Die US 2013/00057109 A1 zeigt einen Bürstenhalter, der Kohlebürsten aufweist, welche zur Kontaktierung mit einer Welle jeweils an einem Kontaktleiter angeordnet sind, derart, dass die Kohlebürsten an einander gegenüberliegenden Umfangskontaktbereichen der Welle angeordnet sind.

Aus der DE 2 421 497 A1 ist eine Gleitbürsteneinheit für rotierende elektrische Maschinen bekannt, die jeweils am Ende einer Blattfeder eine Kohlebürste aufweist, derart, dass die Kohlebürsten an einander gegenüberliegenden Umfangskontaktbereichen einer Welle anliegen.

Aus der DE 20 2013 001 243 U1 ist eine Ableitungseinrichtung bekannt, die zwei an einer Schwenkbasis jeweils um eine Schwenkachse verschwenkbar gelagerte Schwenkhebel aufweist, die an ihren Enden mit einer Kontaktfaseranordnung zur Kontaktierung einer Welle an einander gegenüberliegenden Umfangskontaktbereichen dienen. Die Schwenkhebel sind mit einer Vorspanneinrichtung zur Erzeugung einer auf die Welle wirkenden Kontaktkraft versehen.

Aus der US 7,193,836 ist eine Ableitungseinrichtung zur Ableitung elektrostatischer Ladung von einer Welle bekannt, bei der eine Kohlenstofffaseranordnung aus einer Vielzahl von Filamenten an einem Halter angeordnet sind, der ringförmig ausgebildet und koaxial zur Welle angeordnet ist. Zur Ausbildung eines Berührungskontakts mit der Welle sind Wellenkontaktabschnitte der einzelnen Filamente normal zum Wellenumfang ausgerichtet. Ein Berührungskontakt zwischen den Filamenten und dem Wellenumfang ergibt sich daher lediglich an den axialen Enden der Filamente. Aufgrund der Anordnung der Kohlenstofffaseranordnung an dem ringförmigen Halter ist die bekannte Ableitungseinrichtung lediglich an einer Welle mit definiertem Umfang geeignet.

Der vorliegenden Erfindung liegt die Aufgabe zugrunde, eine Ableitungseinrichtung vorzuschlagen, die eine sichere drehrichtungsunabhängige Kontaktierung mit einem Wellenumfang ermöglicht und welche darüber hinaus zur Ableitung elektrostatischer Ladung von Wellen mit unterschiedlichen Wellendurchmessern geeignet ist.

Zur Lösung dieser Aufgabe weist die erfindungsgemäße Ableitungseinrichtung die Merkmale des Anspruchs 1 auf.

Erfindungsgemäß ist die Ableitungseinrichtung mit einem biegeelastisch ausgebildeten Leiter mit einer Kohlenstofffaseranordnung versehen, die zumindest zwei an einem Halter angeordnete, sich quer zu einer Wellenlängsachse einer zu kontaktierenden Welle erstreckenden und gegenüber dem Halter isolierten Leiterabschnitten versehen ist. Die Leiterabschnitte sind über ihre im Halter aufgenommenen Abschnittsenden mit einem Erdungsleiter verbindbar. Die Leiterabschnitte weisen jeweils einen Wellenkontaktabschnitt auf, die zusammen eine Kontaktanordnung zur Kontaktierung mit zwei einander gegenüberliegend in einer Wellenkontaktebene angeordneten Umfangskontaktbereichen eines Wellenumfangs ausbilden. Dabei sind die Wellenkontaktabschnitte bei Kontakt zum Wellenumfang tangential zum Wellenumfang angeordnet.

Zur isolierten Anordnung der Leiterabschnitte oder insbesondere der Abschnittsenden der Leiterabschnitte im Halter kann der Halter aus einem elektrisch nicht leitenden Material, insbesondere aus Kunststoff, ausgebildet sein.

Aufgrund der zumindest gedoppelten Ausführung der an einander gegenüberliegenden Umfangskontaktbereichen des Wellenumfangs tangential am Wellenumfang anliegenden Wellenkontaktabschnitte funktioniert die erfindungsgemäße Ableitungseinrichtung drehrichtungsunabhängig. Darüber hinaus ermöglicht die Anordnung des biegeelastisch ausgebildeten Leiters mit im Halter aufgenommenen Abschnittsenden von sich quer zu einer Wellenlängsachse erstreckenden Leiterabschnitten eine Kontaktierung der Wellenkontaktabschnitte mit dem Wellenumfang bei unterschiedlichen Wellendurchmessern bzw. Wellenumfängen, da die Wellenkontaktabschnitte aufgrund der biegeelastischen Ausbildung des Leiters auseinander bewegbar sind. Bei einem größeren Wellenumfang erfolgt eine biegeelastische Verformung der Leiterabschnitte, wobei die Wellenkontaktabschnitte in tangentialem Kontakt zum Wellenumfang verbleiben. Eine Vergrößerung des Wellenumfangs hat lediglich eine Verlagerung der auf dem Wellenumfang angeordneten Umfangskontaktbereiche der Welle zur Folge.

Wenn gemäß einer bevorzugten Ausführungsform die Abschnittsenden der Leiterabschnitte relativ beweglich in Leiterführungen des Halters aufgenommen sind, kann bei einer Vergrößerung des Abstandes zwischen den Wellenkontaktabschnitten zumindest ein Teil der Abstandsvergrößerung durch die Relativbewegung der Abschnittsenden in den Leiterführungen ausgeglichen werden, sodass eine Biegebelastung der Leiterabschnitte entsprechend reduziert wird.

Besonders vorteilhaft ist es, wenn zur Ermöglichung der vorgenannten Relativbeweglichkeit die Leiterführungen jeweils aus einem Führungskanal im Halter gebildet sind, mit einem Kanaldurchmesser der größer ist als der Leiterdurchmesser.

Besonders vorteilhaft ist es auch, wenn der Kanaldurchmesser der Führungskanäle sich zu einer Leiteraustrittsfläche des Halters erweitert, sodass im Bereich der Leiteraustrittsfläche kein Biegewiderstand auf die Leiterabschnitte wirkt.

Wenn gemäß einer weiteren vorteilhaften Ausführungsform die Abschnittsenden längs verschiebbar im Halter aufgenommen sind, derart, dass aus dem Leiter herausragende freie Leiterabschnitte in ihrer Länge veränderbar sind, ist es möglich, durch Veränderung der freien Biegelänge des Leiters und der daraus resultierenden Kontaktkraft, mit der die Wellenkontaktabschnitte am Wellenumfang anliegen, die Größe der Kontaktkraft einzustellen.

Wenn die Abschnittsenden der Leiterabschnitte über den Erdungsleiter miteinander verbunden sind, ist es möglich, die Leiterabschnitte aus einzelnen, voneinander unabhängig ausgebildeten Leiterteilstücken zu bilden, die zur gemeinsamen Kontaktierung über den Erdungsleiter miteinander verbunden sind.

Alternativ besteht auch die Möglichkeit, die Abschnittsenden über einen Verbindungsabschnitt einstückig miteinander zu verbinden, sodass der Verbindungsabschnitt zum Anschluss an den Erdungsleiter dient.

Vorzugsweise ist der einstückig ausgebildete Leiter U-förmig oder V-förmig ausgebildet.

Wenn gemäß einer besonderen Ausführungsform der Ableitungseinrichtung der Halter in einer zur Wellenkontaktebene versetzten Halterebene angeordnet ist, wobei die Leiterabschnitte einen sich von der Halterebene zur Wellenkontaktebene schräg erstreckenden Übergangsabschnitt aufweisen, ist es möglich angepasst für entsprechende Einbausituationen, den Halter in Richtung der Wellenlängsachse gegenüber der Wellenkontaktebene versetzt anzuordnen.

Besonders vorteilhaft ist es, wenn die Kohlenstofffaseranordnung des Leiters ein Fasergeflecht aufweist, das mit einer Beschichtung aus pyrolytisch abgeschiedenem Kohlenstoff versehen ist, sodass die Beschichtung aus Pyrokohlenstoff nicht nur dazu dient, eine Kontaktoberfläche des Leiters zu verdichten, sondern darüber hinaus auch eine das Fasergeflecht abstützende Hülle ausbildet, die im Zusammenwirken mit dem Fasergeflecht für die gewünschten biegeelastischen Eigenschaften des Leiters sorgt, der eine Biegesteifigkeit aufweist, die insbesondere auch durch die Dicke der Beschichtung beeinflussbar ist.

Als besonders vorteilhaft hat sich die Ausbildung der Beschichtung durch Anwendung des CVI (Chemical Vapor Infiltration)-Verfahrens herausgestellt, da dieses Verfahren nicht nur für die gewünschte Oberflächenbeschichtung, sondern darüber hinaus auch für die Ausbildung von Bindungskräften zwischen den einzelnen Filamenten des Fasergeflechtes sorgt.

Als besonders vorteilhaft erweist sich, wenn das Fasergeflecht als Umhüllung einer sich in Längsrichtung des Leiters erstreckenden unidirektionalen Faserstrangs ausgebildet ist, der im Wesentlichen parallel zueinander verlaufende Filamente aufweist, so dass durch die Faserzwischenräume Kapillaren ausgebildet werden, welche die Ausnutzung von Kapillareffekten zum Abtransport von Fett oder Feuchtigkeit von dem Wellenumfang ermöglichen.

Zur Erhöhung der Biegesteifigkeit des Leiters ist es vorteilhaft, wenn das Fasergeflecht mit einer Harzmatrix versehen ist.

Besonders vorteilhaft für den praktischen Einsatz der Ableitungseinrichtung wie auch zur Reduzierung des Wartungsaufwands in Verbindung mit dem Austausch eines Leiters der Ableitungseinrichtung ist es, wenn der Halter als Gehäusedeckel ausgebildet ist oder mit einem Gehäusedeckel verbunden ist.

Nachfolgend werden vorteilhafte Ausführungsformen der Erfindung anhand der Zeichnung näher erläutert.

Es zeigen:
- **Fig. 1**: eine Ableitungseinrichtung gemäß einer ersten Ausführungsform in Längsschnittdarstellung;
- **Fig. 2**: die in **Fig. 1** dargestellte Ableitungseinrichtung in Frontansicht;
- **Fig. 3**: einen Leiter der Ableitungseinrichtung in Einzeldarstellung;
- **Fig. 4**: einen Querschnitt durch den in **Fig. 3** dargestellten Leiter;
- **Fig. 5**: eine weitere Ausführungsform einer Ableitungseinrichtung in Seitenansicht;
- **Fig. 6**: die in **Fig. 5** dargestellte Ableitungseinrichtung in Frontansicht.

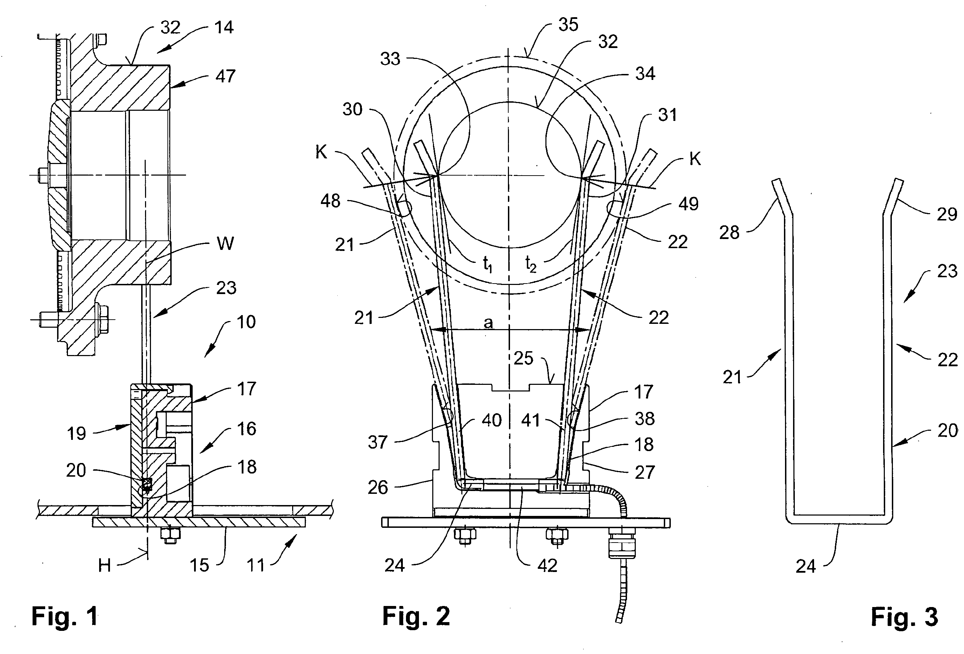

In den **Fig. 1 und 2** ist eine Ableitungseinrichtung 10 dargestellt, die an einer in einem Maschinengehäuse 11 zwischen einer Getriebewelle und einer Motorwelle angeordneten Wellenkupplung 14 installiert ist. Das Maschinengehäuse 11 weist eine mit einem Wartungsdeckel 15 versehene Wartungsöffnung auf, wobei der Wartungsdeckel 15 gleichzeitig zur Anordnung der Ableitungseinrichtung 10 dient.

Die Ableitungseinrichtung 10 weist einen Halter 16 auf, der mit dem Wartungsdeckel 15 verbunden ist. Wie insbesondere aus einer Zusammenschau der **Fig. 1 und 2** deutlich wird, umfasst der Halter 16 im Falle des vorliegenden Ausführungsbeispiels einen Halterkörper 17, der vorzugsweise aus Kunststoff gebildet ist, mit einer im Halterkörper 17 ausgebildeten, hier U-förmigen Führungskanalanordnung 18 und einen im Falle des vorliegenden Ausführungsbeispiels ebenfall aus Kunststoff gebildeten Halterdeckel 19. Die Führungskanalanordnung 18 dient zur Aufnahme eines Befestigungsteils 20 eines mit Leiterabschnitten 21, 22 aus der Führungskanalanordnung 18 herausgeführten Leiters 23.

Der Leiter 23, der im Falle des vorliegenden Ausführungsbeispiels vor seiner Installation, so wie in **Fig. 3** dargestellt, eine U-förmige Gestalt mit den zwei durch die Schenkel des U gebildeten Leiterabschnitten 21, 22 und einen die Basis des U ausbildenden Verbindungsabschnitt 24 aufweist, erfährt nach der Anordnung seines Befestigungsteils 20 in der Führungskanalanordnung 18 eine leichte Aufspreizung der durch die Schenkel ausgebildeten Leiterabschnitte 21, 22, da, wie **Fig. 2** zeigt, zu einer oberen Leiteraustrittsfläche 25 des Halters 16 verlaufende Führungskanäle 37, 38 der Führungskanalanordnung 18 leicht zu Seitenflächen 26, 27 des Halters 16 geneigt sind. Nach der Anordnung des Befestigungsteils 20 des Leiters 23 ist die in **Fig. 2** dargestellte Konfiguration des Leiters 23 eingestellt, und zur Sicherung des Leiters 23 in dieser Konfiguration wird der Halterdeckel 19 mit dem Halterkörper 17 verbunden.

Wie die **Fig. 2 und 3** zeigen, sind die Leiterabschnitte 21, 22 an ihren Enden mit schräg nach außen abgestellten Leiterenden 28, 29 versehen, die verhindern, dass die Leiterenden 28, 29 bei einer Installation der Ableitungseinrichtung 10, bei der die Ableitungseinrichtung 10 radial zu einem Kupplungsbund 47 der Wellenkupplung 14 zugeführt wird, gestaucht werden.

Aus den **Fig. 1 und 2** wird deutlich, dass die Leiterabschnitte 21, 22 in einer Wellenkontaktebene W angeordnet sind, die im Falle der Ableitungseinrichtung 10 mit einer Halterebene H, in der sich der Befestigungsteil 20 des Leiters 23 befindet, zusammenfällt. Ferner zeigt insbesondere die **Fig. 2****,** dass die Leiterabschnitte 21, 22 mit Wellenkontaktabschnitten 30, 31 an einem hier durch die Mantelfläche des Kupplungsbunds 47 gebildeten Wellenumfang 32 in Umfangskontaktbereichen 33, 34 tangential anliegen, wobei aufgrund der biegeelastischen Ausgestaltung der Leiterabschnitte 21, 22 die Wellenkontaktabschnitte 30, 31 mit einer Kontaktkraft K in den Umfangskontaktbereichen 33, 34 am Wellenumfang 32 anliegen. Dies wird besonders deutlich ersichtlich aus der Darstellung von Berührungstangenten t1 und t2, die in **Fig. 2** in den Umfangskontaktbereichen 33, 34 eingezeichnet sind.

Wie ferner aus der Darstellung gemäß **Fig. 2** deutlich wird, ermöglicht der Leiter 23 der Ableitungseinrichtung 10 nicht nur eine Kontaktierung seiner Leiterabschnitte 21, 22 mit dem Wellenumfang 32, sondern darüber hinaus auch mit vergleichsweise größeren Wellenumfängen. **Fig. 2** zeigt mit strichpunktiertem Linienverlauf beispielhaft einen größeren Wellenumfang 35. Bei der Kontaktierung der Leiterabschnitte 21, 22 mit dem größeren Wellenumfang 35 ergibt sich demnach ein vergrößerter Abstand a zwischen den Leiterabschnitten 21, 22, die in dieser Position ebenfalls mit strichpunktiertem Linienverlauf dargestellt sind. Aufgrund des sich zur Leiteraustrittsfläche 25 des Halters erweiternden Kanaldurchmessers der Führungskanäle 37, 38 sind Abschnittsenden 40, 41 der Leiterabschnitte 21, 22 beweglich in den Führungskanälen 37, 38 angeordnet, und eine Biegung der Leiterabschnitte 21, 22 erfolgt im Wesentlichen im unteren Bereich der Führungskanäle 37, 38, in einem Übergangsbereich zwischen den Leiterabschnitten 21, 22 und dem Verbindungsabschnitt 24.

Im Falle des dargestellten Ausführungsbeispiels dient der Verbindungsabschnitt 24 zum Anschluss eines Erdungsleiters 42.

Wie auch aus **Fig. 2** zu ersehen ist, bedingt ein vergrößerter Abstand a zwischen den Leiterabschnitten 21, 22 in Folge einer Kontaktierung der Leiterabschnitte 21, 22 mit einem größeren Wellenumfang 35 die Ausbildung von nach unten, also zum Halter 16 hin, verschobenen Umfangskontaktbereichen 48, 49.

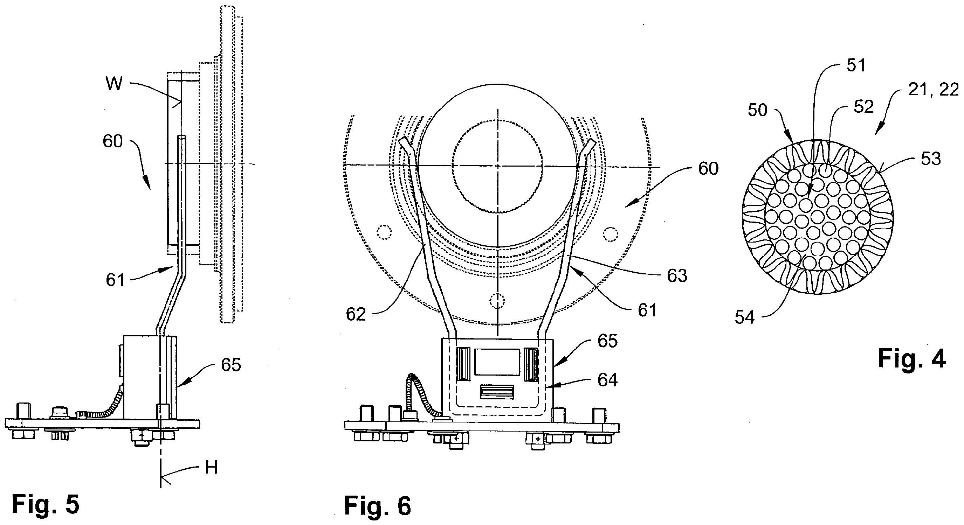

**Fig. 4** zeigt eine vergrößerte Querschnittsdarstellung eines Leiterabschnitts 21, 22, der zu entnehmen ist, dass die Kohlenstofffaseranordnung des Leiters ein Fasergeflecht 50 aufweist, das als Umhüllung eines sich in Längsrichtung des Leiters 23 erstreckenden unidirektionalen Faserstrangs 51 mit im Wesentlichen parallel zueinander verlaufenden Filamenten 52 ausgebildet ist. Das Fasergeflecht 50 ist mit einer Beschichtung 53 aus pyrolytisch abgeschiedenem Kohlenstoff versehen, die eine Aussteifung des Leiters in Richtung einer auf diesen wirkenden Querkraft, also etwa die in **Fig. 2** eingezeichnete Kontaktkraft K, bewirkt. Durch die zwischen den Filamenten 52 des Faserstrangs 51 ausgebildeten Faserzwischenräume 54 wird ein Kapillareffekt ermöglicht.

In den **Fig. 5 und 6** ist eine Ableitungseinrichtung 60 dargestellt, die im Unterschied zu der bezugnehmend auf die **Fig. 1 und 2** erläuterte Ableitungseinrichtung 10 einen Leiter 61 aufweist, der Leiterabschnitte 62, 63 aufweist, die anschließend an einen Befestigungsteil 64, ausgebildet sind, der zur Aufnahme in einem Halter 65 dient. Die Leiterabschnitte 62, 63 weisen sich schräg erstreckende Übergangsabschnitte 66, 67 auf, die, wie insbesondere in **Fig. 5** dargestellt, eine Installation der Ableitungseinrichtung 60 ermöglichen, derart, dass der Halter 65 in einer zur Wellenkontaktebene W versetzten Halterebene H angeordnet ist.

## Patentansprüche

1. Ableitungseinrichtung (10, 60) zur Ableitung elektrostatischer Ladung von einer Welle mit einem biegeelastisch ausgebildeten Leiter (23, 61) mit einer Kohlenstofffaseranordnung mit zumindest zwei an einem Halter (16, 65) angeordneten, sich quer zu einer Wellenlängsachse erstreckenden und gegenüber dem Halter isolierten Leiterabschnitten (21, 22, 62, 63) die über ihre im Halter aufgenommenen Abschnittssenden (40, 41) mit einem Erdungsleiter (42) verbindbar sind, wobei die Leiterabschnitte jeweils einen Wellenkontaktabschnitt (30, 31) aufweisen, und die Wellenkontaktabschnitte zusammen eine Kontaktanordnung zur Kontaktierung mit zwei einander gegenüberliegend in einer Wellenkontaktebene W angeordneten Umfangskontaktbereichen (33, 34) eines Wellenumfangs (32, 35) ausbilden, derart, dass die Wellenkontaktabschnitte bei Kontakt zum Wellenumfang tangential zum Wellenumfang angeordnet sind,
**dadurch gekennzeichnet,**
**dass** bei einer Vergrößerung des Wellenumfangs ein tangentialer Kontakt erhalten bleibt und lediglich eine Verlagerung der auf dem Wellenumfang angeordneten Umfangskontaktbereiche der Welle erfolgt, derart, dass die Umfangskontaktbereiche zum Halter (16, 65) hin verschoben werden.

2. Ableitungseinrichtung nach Anspruch 1, **dadurch gekennzeichnet,dass** die Abschnittsenden (40, 41) der Leiterabschnitte (21, 22) relativ beweglich in Leiterführungen des Halters aufgenommen sind.

3. Ableitungseinrichtung nach Anspruch 2,
**dadurch gekennzeichnet,**
**dass** die Leiterführungen jeweils aus einem Führungskanal (37, 38) im Halter (16) gebildet sind, mit einem Kanaldurchmesser, der größer ist als der Leiterdurchmesser.

4. Ableitungseinrichtung nach Anspruch 3,
**dadurch gekennzeichnet,**
**dass** der Kanaldurchmesser der Führungskanäle (37, 38) sich zu einer Leiteraustrittsfläche (25) des Halters (16) erweitert.

5. Ableitungseinrichtung nach einem der Ansprüche 2 bis 4,
**dadurch gekennzeichnet,**
**dass** die Abschnittsenden längsverschiebbar im Halter aufgenommen sind, derart, dass aus dem Halter herausragende freie Leiterabschnitte in ihrer Länge veränderbar sind.

6. Ableitungseinrichtung nach einem der vorangehenden Ansprüche, **dadurch gekennzeichnet,**
**dass** die Abschnittsenden (40, 41) über den Erdungsleiter (42) miteinander verbunden sind.

7. Ableitungseinrichtung nach einem der vorangehenden Ansprüche, **dadurch gekennzeichnet,**
**dass** die Abschnittsenden (40, 41) über einen Verbindungsabschnitt (24) einstückig miteinander verbunden sind, und der Verbindungsabschnitt zum Anschluss an den Erdungsleiter (42) dient.

8. Ableitungseinrichtung nach Anspruch 7,
**dadurch gekennzeichnet,**
**dass** der Leiter (23, 61) U-förmig oder V-förmig ausgebildet ist.

9. Ableitungseinrichtung nach einem der vorangehenden Ansprüche, **dadurch gekennzeichnet,**
**dass** der Halter (65) in einer zur Wellenkontaktebene W versetzten Halterebene H angeordnet ist, wobei die Leiterabschnitte (62, 63) einen sich von der Halterebene H zur Wellenkontaktebene W schräg erstreckenden Übergangsabschnitt (66, 67) aufweisen.

10. Ableitungseinrichtung nach einem der vorangehenden Ansprüche, **dadurch gekennzeichnet,**
**dass** die Kohlenstofffaseranordnung des Leiters ein Fasergeflecht (50) aufweist, das mit einer Beschichtung (53) aus pyrolytisch abgeschiedenem Kohlenstoff versehen ist.

11. Ableitungseinrichtung nach Anspruch 10,
**dadurch gekennzeichnet,**
**dass** das Fasergeflecht (50) als Umhüllung einer sich in Längsrichtung des Leiters (23, 61) erstreckenden unidirektionalen Faserstrangs (51) ausgebildet ist.

12. Ableitungseinrichtung nach Anspruch 10 oder 11,
**dadurch gekennzeichnet,**
**dass** das Fasergeflecht (50) mit einer Harzmatrix versehen ist.

13. Ableitungseinrichtung nach einem der vorangehenden Ansprüche, **dadurch gekennzeichnet,**
**dass** der Halter (16) als Gehäusedeckel ausgebildet oder mit einem Gehäusedeckel verbunden ist.

## Claims

1. A discharge device (10, 60) for discharging electrostatic charges from a shaft, the discharge device comprising a flexurally elastic conductor (23, 61) having a carbon fiber arrangement comprising at least two conductor portions (21, 22, 62, 63) which are disposed on a holder (16, 65), extend transversely to a longitudinal axis of the shaft and are insulated from the holder and which can be connected to a ground conductor (42) via their portion ends (40, 41) which are accommodated in the holder, each of the conductor portions having a shaft contact portion (30, 31), and the shaft contact portions together forming a contact arrangement for making contact with two circumferential contact regions (33, 34) of a shaft circumference (32, 35), which are disposed opposite each other in a shaft contact plane W, in such a manner that the shaft contact portions are disposed tangentially to the shaft circumference when making contact with the shaft circumference,
**characterized in that**
when the shaft circumference is enlarged, a tangential contact remains and the circumferential contact regions of the shaft disposed on the shaft circumference are merely shifted in such a manner that the circumferential contact regions are moved toward the holder (16, 65).

2. The discharge device according to claim 1,
**characterized in that**
the portion ends (40, 41) of the conductor portions (21, 22) are accommodated in a relatively mobile manner in conductor guides of the holder.

3. The discharge device according to claim 2,
**characterized in that**
the conductor guides are each formed by a guide channel (37, 38) in the holder (16), said guide channels having a channel diameter that is larger than the conductor diameter.

4. The discharge device according to claim 3,
**characterized in that**
the channel diameter of the guide channels (37, 38) widens toward a conductor exit surface (25) of the holder (16).

5. The discharge device according to any one of claims 2 to 4, **characterized in that**
the portion ends are accommodated in the holder in a longitudinally mobile manner such that free conductor portions protruding out of the holder can be changed in length.

6. The discharge device according to any one of the preceding claims,
**characterized in that**
the portion ends (40, 41) are connected to each other via the ground conductor (42).

7. The discharge device according to any one of the preceding claims,
**characterized in that**
the portion ends (40, 41) are connected to each other in one piece via a connecting portion (24), and the connecting portion is used to form the connection with the ground conductor (42).

8. The discharge device according to claim 7,
**characterized in that**
the conductor (23, 61) is U-shaped or V-shaped.

9. The discharge device according to any one of the preceding claims,
**characterized in that**
the holder (65) is disposed in a holder plane H, which is offset relative to shaft contact plane W, the conductor portions (62, 63) having a transition portion (66, 67) extending in an inclined manner from holder plane H to shaft contact plane W.

10. The discharge device according to any one of the preceding
claims,
**characterized in that**
the carbon fiber arrangement of the conductor has a fiber network (50) which is provided with a coating (53) of pyrolytically deposited carbon.

11. The discharge device according to claim 10,
**characterized in that**
the fiber network (50) is realized as an envelope of a unidirectional fiber strand (51) extending in the longitudinal direction of the conductor (23, 61).

12. The discharge device according to claim 10 or 11,
**characterized in that**
the fiber network (50) is provided with a resin matrix.

13. The discharge device according to any one of the preceding
claims,
**characterized in that**
the holder (16) is realized as a housing cover or is connected to a housing cover.

## Revendications

1. Dispositif de décharge (10, 60) pour décharger des charges électrostatiques d'un arbre, le dispositif de décharge comprenant un conducteur (23, 61) élastique en flexion qui a un arrangement de fibres de carbone comprenant au moins deux parties de conducteur (21, 22, 62, 63) qui sont disposées sur un support (16, 65), s'étendent transversalement à un axe longitudinal de l'arbre et sont isolées du support et qui peuvent être connectées à un conducteur de terre (42) par leurs extrémités de partie (40, 41) qui sont logées dans le support, chaque partie de conducteur ayant une partie de contact d'arbre (30, 31) et les parties de contact d'arbre formant conjointement un arrangement de contact pour venir en contact avec deux zones de contact circonférentiel (33, 34) d'une circonférence d'arbre (32, 35), qui sont disposées de manière opposée l'une à l'autre dans un plan de contact d'arbre W, de telle manière que les parties de contact d'arbre sont disposées tangentiellement à la circonférence d'arbre lors du contact avec la circonférence d'arbre,
**caractérisé en ce que**
quand la circonférence d'arbre est augmentée, un contact tangentiel est maintenu et les zones de contact circonférentiel de l'arbre qui sont disposées sur la circonférence d'arbre sont simplement déplacées de telle manière que les zones de contact circonférentiel sont décalées vers le support (16, 65).

2. Dispositif de décharge selon la revendication 1,
**caractérisé en ce que**
les extrémités de partie (40, 41) des parties de conducteur (21, 22) sont logées de manière relativement mobile dans des guides de conducteur du support.

3. Dispositif de décharge selon la revendication 2,
**caractérisé en ce que**
les guides de conducteur sont formés chacun par un canal de guidage (37, 38) dans le support (16), lesdits canaux de guidage ayant un diamètre de canal qui est supérieur au diamètre de conducteur.

4. Dispositif de décharge selon la revendication 3,
**caractérisé en ce que**
le diamètre de canal des canaux de guidage (37, 38) s'élargit vers une surface de sortie de conducteur (25) du support (16).

5. Dispositif de décharge selon l'une quelconque des revendications 2 à 4,
**caractérisé en ce que**
les extrémités de partie sont logées dans le support de manière mobile longitudinalement de sorte que la longueur de parties de conducteur libres dépassant du support peuvent être changée.

6. Dispositif de décharge selon l'une quelconque des revendications précédentes,
**caractérisé en ce que**
les extrémités de partie (40, 41) sont reliées par l'intermédiaire du conducteur de terre (42).

7. Dispositif de décharge selon l'une quelconque des revendications précédentes,
**caractérisé en ce que**
les extrémités de partie (40, 41) sont reliées d'un seul tenant par l'intermédiaire d'une partie de liaison (24) et la partie de liaison est utilisée pour former la connexion au conducteur de terre (42).

8. Dispositif de décharge selon la revendication 7,
**caractérisé en ce que**
le conducteur (23, 61) est en forme de U ou de V.

9. Dispositif de décharge selon l'une quelconque des revendications précédentes,
**caractérisé en ce que**
le support (65) est disposé dans un plan de support H qui est décalé par rapport au plan de contact d'arbre W, les parties de conducteur (62, 63) ayant une partie de transition (66, 67) qui s'étend obliquement du plan de support H au plan de contact d'arbre W.

10. Dispositif de décharge selon l'une quelconque des revendications
précédentes,
**caractérisé en ce que**
l'arrangement de fibres de carbone du conducteur a un réseau de fibres (50) qui est muni d'un revêtement (53) de carbone déposé par pyrolyse.

11. Dispositif de décharge selon la revendication 10,
**caractérisé en ce que**
le réseau de fibres (50) est configurée comme enveloppe d'un faisceau de fibres (51) unidirectionnel qui s'étend dans la direction longitudinale du conducteur (23, 61).

12. Dispositif de décharge selon la revendication 10 ou la revendication 11,
**caractérisé en ce que**
le réseau de fibres (50) est muni d'une matrice de résine.

13. Dispositif de décharge selon l'une quelconque des revendications
précédentes,
**caractérisé en ce que**
le support (16) est configuré comme couvercle de boîtier ou il est relié avec un couvercle de boîtier.
